# EUROPÄISCHE PATENTANMELDUNG

(11) **EP 4 546 611 A1**
(43) Veröffentlichungstag der Anmeldung: **30.04.2025**
(21) Anmeldenummer: 24207851.7
(22) Anmeldetag: 21.10.2024
(51) Int. Cl.: H02J 50/10, H02J 50/80, F24C 7/08, A47J 36/32, H05B 6/02

(54) **VERFAHREN ZUM BETREIBEN EINES MOBILEN HAUSHALTGERÄTS UNTER VERWENDUNG EINER ENERGIEVERSORGUNGSVORRICHTUNG, STEUEREINRICHTUNG UND ENERGIEVERSORGUNGSVORRICHTUNG**

(30) Priorität: 27.10.2023 DE 102023129675
(71) Anmelder: Miele & Cie. KG, 33332 Gütersloh (DE)
(72) Erfinder: Wilkens, Henrik, 49080 Osnabrück (DE); Ennen, Volker, Dr., 32257 Bünde (DE); Auell, Alexander, 33613 Bielefeld (DE); Hormann, Michael, 33332 Gütersloh (DE)

(57) **Zusammenfassung**

Ein Verfahren zum Betreiben eines mobilen Haushaltgeräts (120) unter Verwendung einer Energieversorgungsvorrichtung (100), die eine Mehrzahl von Energieversorgungszonen (102, 104, 106, 108) zum Versorgen mobiler Haushaltgeräte mit Energie aufweist, umfasst einen Schritt des Einlesens eines Erkennungssignals, das ein Anordnen eines mobilen Haushaltgeräts (120) auf einer der Mehrzahl von Energieversorgungszonen (102, 104, 106, 108) anzeigt und eine Kennung der Energieversorgungszone (102) und eine Identifikation des mobilen Haushaltgeräts (120) umfasst, ein Nachschlagen eines Betriebsparameters für eine Geräteeinstellung des mobilen Haushaltgeräts (120) und ein Bereitstellen eines Einstellsignals zum Durchführen der Geräteeinstellung an dem mobilen Haushaltgerät (120) unter Verwendung des Betriebsparameters.

## Beschreibung

Die Erfindung betrifft ein Verfahren zum Betreiben eines mobilen Haushaltgeräts unter Verwendung einer Energieversorgungsvorrichtung, eine Steuereinrichtung und eine Energieversorgungsvorrichtung, beispielsweise ein Kochfeld.

Der hier vorgestellte Ansatz stellt sich die Aufgabe, ein verbessertes Verfahren zum Betreiben eines mobilen Haushaltgeräts unter Verwendung einer Energieversorgungsvorrichtung, eine verbesserte Steuereinrichtung und eine verbesserte Energieversorgungsvorrichtung zu schaffen.

Erfindungsgemäß wird diese Aufgabe durch ein Verfahren zum Betreiben eines mobilen Haushaltgeräts unter Verwendung einer Energieversorgungsvorrichtung, eine Steuereinrichtung und eine Energieversorgungsvorrichtung mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen in einer vereinfachten Handhabung von mobilen Haushaltgeräten.

Ein Verfahren zum Betreiben eines mobilen Haushaltgeräts unter Verwendung einer Energieversorgungsvorrichtung, die eine Mehrzahl von Energieversorgungszonen zum Versorgen mobiler Haushaltgeräte mit Energie umfasst, umfasst die folgenden Schritte:
Einlesen eines Erkennungssignals, das ein Anordnen eines mobilen Haushaltgeräts auf einer der Mehrzahl von Energieversorgungszonen anzeigt und eine Kennung der Energieversorgungszone und eine Identifikation des mobilen Haushaltgeräts umfasst;
Nachschlagen eines Betriebsparameters für eine Geräteeinstellung des mobilen Haushaltgeräts in einer Speichereinrichtung unter Verwendung der von dem Erkennungssignal umfassten Identifikation des mobilen Haushaltgeräts; und
Bereitstellen eines Einstellsignals zum Durchführen der Geräteeinstellung an dem mobilen Haushaltgerät unter Verwendung des Betriebsparameters.

Unter einem mobilen Haushaltgerät kann ein elektrischer Verbraucher verstanden werden, beispielsweise ein Mixer oder ein Toaster. Wenn das mobile Haushaltgerät auf einer der Energieversorgungszonen abgestellt ist, kann es mittels induktiver Kopplung von der Energieversorgungsvorrichtung drahtlos mit zum Betreiben des mobilen Haushaltgeräts erforderlicher Energie versorgt werden. Die Energieversorgungsvorrichtung kann auch als Transmitter und das mobile Haushaltgerät kann als Receiver bezeichnet werden. Die Energieversorgungsvorrichtung kann beispielsweise als Kochfeld ausgeführt sein. In diesem Fall können die Energieversorgungszonen sowohl als Kochstelle als auch als Ladezone verwendet werden. Alternativ kann die Energieversorgungsvorrichtung auch nur zum Betreiben mobiler Haushaltgeräte vorgesehene Ladezonen umfassen.

Zum Betreiben eines mobilen Haushaltgerätes kann dieses auf einer der Energieversorgungszonen angeordnet, beispielsweise abgestellt werden. Das Anordnen kann automatisiert, z.B. über eine in die Energieversorgungszone integrierte NFC Schnittstelle, erkannt werden. Die Identifikation des mobilen Haushaltgeräts kann das mobile Haushaltgerät eindeutig kennzeichnen, sodass es von anderen mobilen Haushaltgeräten unterschieden werden kann. Jeder der Mehrzahl von Energieversorgungszonen kann eine eigene Kennung zugeordnet sein. Auf diese Weise kann festgestellt werden, welches Haushaltgerät sich auf welcher Energieversorgungszone befindet.

Unter einer Geräteeinstellung kann eine Betriebsart, beispielsweise ein ausgewähltes Programm, eine eingestellte Drehzahl eines Elektromotors des mobilen Haushaltgeräts oder eine eingestellte Temperatur einer Heizeinrichtung des mobilen Haushaltgeräts verstanden werden, mit der das mobile Haushaltgerät betrieben wird. Die Geräteeinstellung kann durch den Betriebsparameter definiert sein. Unterschiedliche Geräteeinstellungen können durch unterschiedliche Betriebsparameter definiert sein. Die Speichereinrichtung kann in der Energieversorgungsvorrichtung, einer Cloud oder einem mobilen Gerät, beispielsweise einem Smartphone angeordnet sein. Wenn für das mobile Haushaltgerät ein Betriebsparameter gespeichert ist, kann dieser verwendet werden, um die Geräteeinstellung vorzunehmen, ohne dass ein Nutzer eingreifen muss.

Das Einstellsignal ermöglicht eine automatisierte Einstellung der Geräteeinstellung, wenn der Betriebsparameter nachgeschlagen werden konnte. Beispielsweise kann das Einstellsignal verwendet werden, um einen Betrieb der Energieversorgungszone zu steuern, auf der das mobile Haushaltgerät angeordnet ist. Alternativ oder zusätzlich kann das Einstellsignal verwendet werden, um die Geräteeinstellung direkt an dem mobilen Haushaltgerät durchzuführen. Dazu kann die Energieversorgungszone ausgebildet sein, um eine Datenübertragung zu dem mobilen Haushaltgerät zu ermöglichen, beispielsweise über eine geeignete Datenschnittstelle. Auf diese Weise kann die Geräteeinstellung automatisiert direkt an dem mobilen Haushaltgerät durchgeführt werden, sobald das mobile Haushaltgerät auf einer Energieversorgungszone abgestellt wird.

Im Schritt des Nachschlagens kann der Betriebsparameter unter Verwendung der von dem Erkennungssignal umfassten Kennung ausgelesen werden. Auf diese Weise kann der Betriebsparameter nicht nur abhängig von der Identifikation des mobilen Haushaltsgeräts sondern auch abhängig von der Energieversorgungszone ausgewählt werden, auf der das mobile Haushaltgerät angeordnet ist. Dies ist vorteilhaft, wenn es gewünscht ist, dass das mobile Haushaltgerät auf unterschiedlichen Energieversorgungszonen mit unterschiedlichen Geräteeinstellungen betrieben wird.

Die Schritte des Nachschlagens und Bereitstellens können wiederholt ausgeführt werden, beispielsweise wenn in einem wiederholten Schritt des Einlesens ein weiteres Erkennungssignal erfasst wird, das eine Anordnung des mobilen Haushaltgeräts auf einer weiteren der Mehrzahl von Energieversorgungszonen anzeigt. Dies kann der Fall sein, wenn das mobile Haushaltgerät von einer Energieversorgungszone auf eine weitere Energieversorgungszone verschoben wird. In diesem Fall kann das weitere Erkennungssignal eine Kennung der weiteren Energieversorgungszone und die Identifikation des mobilen Haushaltgeräts umfassen. Vorteilhafterweise können auf diese Weise Geräteeinstellungen auch dann beibehalten werden, wenn das mobile Haushaltgerät auf einer anderen Energieversorgungszone angeordnet wird. Wenn für die weitere Energieversorgungszone ein anderer Betriebsparameter hinterlegt ist, kann das mobile Haushaltgerät auf der weiteren Energieversorgungszone mit einer anderen Geräteeinstellung betrieben werden, ohne dass ein Nutzer manuell eingreifen müsste.

Gemäß einer Ausführungsform kann das Erkennungssignal einen Zeitpunkt des Anordnens des mobilen Haushaltgeräts auf der Energieversorgungszone und einen Zeitpunkt des Entfernens des mobilen Haushaltgeräts von der Energieversorgungszone anzeigen. Entsprechend kann das weitere Erkennungssignal einen weiteren Zeitpunkt des Anordnens des mobilen Haushaltgeräts auf der weiteren Energieversorgungszone anzeigen. Auf diese Weise kann beispielsweise ausgewertet werden, wie lange ein Wechsel eines Verschiebens des mobilen Haushaltgeräts von einer Energieversorgungszone auf eine weitere Energieversorgungszone dauert. Abhängig von der Dauer kann beispielsweise entschieden werden, ob das mobile Haushaltgerät auf der neuen Energieversorgungszone mit der gleichen Geräteeinstellungen weiter betrieben wird wie auf der ursprünglichen Energieversorgungszone.

Somit kann der wiederholte Schritt des Nachschlagens abhängig von einer Zeitspanne zwischen dem Zeitpunkt des Entfernens des mobilen Haushaltgeräts von der Energieversorgungszone und dem Zeitpunkt des Anordnens des mobilen Haushaltgeräts auf der weiteren Energieversorgungszone ausgeführt werden.

Beispielsweise kann in dem wiederholten Schritt des Nachschlagens der Betriebsparameter für die Geräteeinstellung des mobilen Haushaltgeräts in der Speichereinrichtung nachgeschlagen werden, wenn die Zeitspanne kleiner als eine vorbestimmte Wechselzeit ist. Dies ist vorteilhaft, weil bei einer kurzen Wechselzeit angenommen werden kann, dass die Geräteeinstellung beibehalten werden soll.

Dabei kann in dem wiederholten Schritt des Bereitstellens ein weiteres Einstellsignal zum Durchführen der Geräteeinstellung an dem mobilen Haushaltgerät unter Verwendung des Betriebsparameters durchgeführt werden, wenn ein Bestätigungssignal eine über eine Benutzerschnittstelle getätigte Bestätigung eines Nutzers anzeigt. Die Benutzerschnittstelle kann beispielsweise an der Energieversorgungsvorrichtung oder an einem mobilen Gerät angeordnet sein. Über die Benutzerschnittstelle kann ein Nutzer gefragt werden, ob er trotz des Wechsels des mobilen Haushaltgeräts auf die weitere Energieversorgungszone einen weiteren Betrieb des mobilen Haushaltgeräts mit der gespeicherten Geräteeinstellung wünscht.

In dem wiederholten Schritt des Nachschlagens kann ein Defaultparameter als der Betriebsparameter für die Geräteeinstellung des mobilen Haushaltgeräts in der Speichereinrichtung nachgeschlagen werden, wenn die Zeitspanne größer als die vorbestimmte Wechselzeit ist. Dies ist vorteilhaft, da in diesem Fall angenommen werden kann, dass der Nutzer einen Weiterbetrieb des Haushaltgeräts mit der vorigen Geräteeinstellung nicht wünscht.

Das Verfahren kann einen Schritt des Aktualisierens des der Identifikation des mobilen Haushaltgeräts zugeordneten Betriebsparameters in der Speichereinrichtung umfassen. Das Aktualisieren kann ansprechend auf eine Änderung der Geräteeinstellung des mobilen Haushaltgeräts durchgeführt werden. Auf diese Weise kann stets ein einer aktuellen Geräteeinstellung entsprechender Betriebsparameter hinterlegt und für eine nachfolgende Anordnung des mobilen Haushaltgeräts auf einer neuen Energieversorgungszone verwendet werden.

Das Verfahren kann einen Schritt des Speicherns des der Identifikation des mobilen Haushaltgeräts zugeordneten Betriebsparameters zusammen mit einer Kennung einer der Mehrzahl von Energieversorgungszonen in der Speichereinrichtung umfassen. Das Speichern kann ansprechend auf eine Anordnung des mobilen Haushaltgeräts auf der Energieversorgungszone erfolgen. Somit können benutzerdefinierte Geräteeinstellungen verknüpft mit der aktuell verwendeten Energieversorgungszone abgespeichert werden, sobald ein mobiles Haushaltgerät auf eine der Energieversorgungszonen abgestellt wird.

Das Verfahren kann einen Schritt des Übertragens des Betriebsparameters zu einer Speichereinrichtung einer anderen Energieversorgungseinrichtung umfassen, die eine Mehrzahl von anderen Energieversorgungszonen zum Versorgen mobiler Haushaltgeräte mit Energie umfasst. Auf diese Weise können gespeicherte Betriebsparameter beispielsweise zwischen unterschiedlichen Kochfeldern oder unter Arbeitsplatten verbauten Energieversorgungsvorrichtungen ausgetauscht werden. Dies ist vorteilhaft, wenn das mobile Haushaltgerät mit unterschiedlichen Energieversorgungsvorrichtung verwendet wird.

Der hier vorgestellte Ansatz schafft ferner eine Steuereinrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinrichtung einlesbares Sensorsignal darstellen. Ein Ausgangssignal kann ein Steuersignal oder ein Datensignal darstellen, das an einer Ausgangsschnittstelle der Steuereinrichtung bereitgestellt werden kann. Die Steuereinrichtung kann ausgebildet sein, um die Ausgangssignale unter Verwendung einer in Hardware oder Software umgesetzten Verarbeitungsvorschrift zu bestimmen. Beispielsweise kann die Steuereinrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Eine entsprechende Energieversorgungsvorrichtung umfasst eine Mehrzahl von Energieversorgungszonen zum Versorgen mobiler Haushaltgeräte mit Energie sowie eine genannte Steuereinrichtung. Beispielsweise kann die Energieversorgungsvorrichtung als ein Kochfeld ausgeführt sein. Dabei kann zumindest eine der Mehrzahl von Energieversorgungszonen als eine induktive Kochzone zum Erhitzen eines Kochgeschirrs, beispielsweise eines Kochtopfs, und zusätzlich als eine induktive Ladezone zum Versorgen eines mobilen Haushaltgerätes mit Energie ausgeführt sein.

Auch wenn der beschriebene Ansatz anhand eines Haushaltgeräts beschrieben wird, kann der hier beschriebene Ansatz entsprechend im Zusammenhang mit einem gewerblichen oder professionellen Gerät eingesetzt werden.

Ein Ausführungsbeispiel der Erfindung ist in den Zeichnungen rein schematisch dargestellt und wird nachfolgend näher beschrieben. Es zeigt
- Figur 1: eine Darstellung eines Ausführungsbeispiels einer Energieversorgungsvorrichtung;
- Figur 2: eine Darstellung eines Ausführungsbeispiels einer Energieversorgungsvorrichtung;
- Figur 3: eine Darstellung eines Ausführungsbeispiels einer Energieversorgungsvorrichtung;
- Figur 4: eine schematische Darstellung eines Ausführungsbeispiels einer Steuereinrichtung; und
- Figur 5: ein Ausführungsbeispiel eines Ablaufdiagramms eines Verfahrens zum Betreiben eines mobilen Haushaltgeräts.

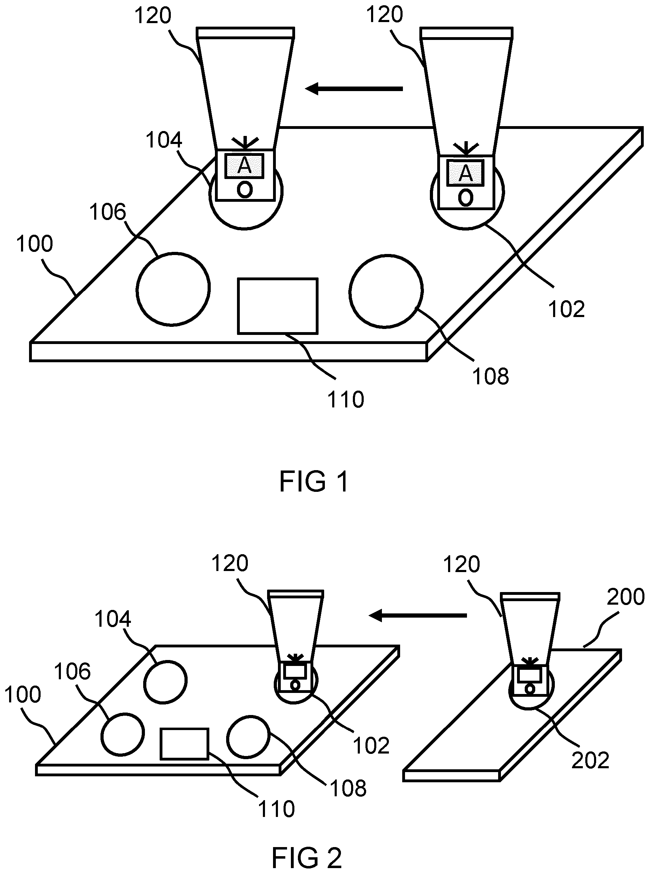

Figur 1 zeigt eine Darstellung eines Ausführungsbeispiels einer

Energieversorgungsvorrichtung 100. Beispielhaft ist die Energieversorgungsvorrichtung 100 als ein Kochfeld mit vier Energieversorgungszonen 102, 104, 106, 108 ausgeführt, die optional jeweils eine Doppelfunktion ausüben. Beispielhaft sind die Energieversorgungszonen 102, 104, 106, 108 sowohl als Energieversorgungszone als auch als Kochstelle nutzbar. Optional weist Energieversorgungsvorrichtung 100 eine Bedienschnittstelle 110 auf, die es einem Benutzer ermöglicht, die Energieversorgungsvorrichtung 100 zu bedienen. Beispielhaft ist die Bedienschnittstelle 110 als eine Kochfeld-Ul ausgeführt.

Die Energieversorgungszonen 102, 104, 106, 108 sind beispielhaft in einer Arbeitsplatte oder einer Kochfeldplatte voneinander beanstandet platziert.

Ein mobiles Haushaltgerät 120, beispielsweise ein Kleingerät wie ein Mixer, ist beispielhaft auf einer ersten Energieversorgungszone 102 abgestellt. Die erste Energieversorgungszone 102 weist eine Transmitterspule auf, mittels der ein magnetisches Wechselfeld erzeugt werden kann, über das Energie von der ersten Energieversorgungszone 102 zu dem mobilen Haushaltgerät 120 übertragen werden kann. Dazu weist das mobile Haushaltgerät 120 eine Receiverspule auf, die ausgebildet ist um unter Verwendung des magnetischen Wechselfelds elektrische Energie bereitzustellen, die zum Betrieb des mobilen Haushaltgeräts 120 verwendet werden kann. Beispielsweise umfasst das mobile Haushaltgerät 120 einen Elektromotor und einen Heizwiderstand, die unter Verwendung der elektrischen Energie betrieben werden können. Bei einer ersten Geräteeinstellung des mobilen Haushaltgeräts 120 wird der Elektromotor beispielsweise mit einer ersten Drehzahl betrieben und der Heizwiderstand bis zu einer ersten Temperatur aufgeheizt. Optional weist das mobile Haushaltgerät 120 eine Anzeigeeinrichtung, beispielsweise ein Display auf, auf dem die Geräteeinstellung angezeigt wird, beispielsweise hier mit einem "A".

Gemäß einem Ausführungsbeispiel sind die weiteren Energieversorgungszonen 104, 106, 108 entsprechend der ersten Energieversorgungszone 102 ausgeführt.

Der hier beschriebene Ansatz ermöglicht eine Mitnahme der Geräteeinstellung, mit der das mobile Haushaltgerät 120 betrieben wird, während es sich auf der ersten Energieversorgungszone 102 befindet, wenn das mobile Haushaltgerät 120 von der ersten Energieversorgungszone 102 zu einer anderen Energieversorgungszone, hier beispielsweise der zweiten Energieversorgungszone 104 verschoben wird.

Vorzugsweise entspricht die Energieversorgungsvorrichtung 100 einer ersten Funktionseinheit, einem Energiesender und das mobile Haushaltgerät 120 einem sogenannten Energieempfänger. Die Energieversorgungsvorrichtung 100 und das mobile Haushaltgerät 102 weisen jeweils eine induktionsspule zur Energieübertragung bzw. zum Energieempfang und optional eine zusätzliche Kommunikationsschnittstelle, beispielsweise eine sogenannte Near Field Communication (NFC) Spule zur Kommunikation zwischen Sender und Empfänger auf.

Die Sendeeinheit der Energieversorgungsvorrichtung 100 kann dabei für sich stehen, Teil einer Kochzone eines Kochfelds sein oder versteckt unter einer Arbeitsplatte montiert werden.

Der beschriebene Ansatz kann im Zusammenhang mit einer Anmeldung von Kleingeräten, wie dem mobilen Haushaltgerät 120, in einem Heimnetz verwendet werden.

Kleingeräte, wie das mobile Haushaltgerät 120 können mittels einer App gesteuert werden. Bei einer großen Anzahl App-gestützter Kleingeräte ist es für einen Nutzer sehr mühsam jedes einzelne Gerät in der App zu registrieren. Dieses registrieren wird gemäß einem Ausführungsbeispiel automatisiert durchgeführt, wenn die Energieversorgungsvorrichtung 100 beispielsweise vernetzungsfähig ist. In diesem Fall wird beispielsweise das mobile Haushaltgerät 120 automatisch in einer App registriert, sobald es auf einer der Energieversorgungszonen 102, 104, 106, 108 abgestellt wird.

Vorteilhafterweise werden dem Nutzer gemäß einem Ausführungsbeispiel des hier beschriebenen Ansatzes zudem Handgriffe des immer erneuten Eingebens von Betriebsparametern durch das Speichern individueller Geräteeinstellungen in der App erspart und gegebenenfalls ebenfalls eine Verknüpfung mit den Energieversorgungszonen 102, 104, 106, 108. Die Geräteeinstellungen werden gemäß einem Ausführungsbeispiel automatisch wiederaufgerufen bei erneuter Aufstellung auf derselben Energieversorgungszone 102, 104, 106, 108.

Gemäß einem Ausführungsbeispiel speichert, wenn ein geeignetes Kleingerät, beispielsweise das mobile Haushaltgerät 120, auf ein Kochfeld mit einer oder mehreren geeigneten Zonen gestellt wird, hier beispielhaft auf die Energieversorgungsvorrichtung 100 mit den Energieversorgungszonen 102, 104, 106, 108, die Energieversorgungsvorrichtung 100 die benutzerdefinierten Geräteeinstellung des mobilen Haushaltgeräts 120 und verknüpft diese mit der benutzten Zone, hier beispielsweise der ersten Energieversorgungszone 102. Wird das mobile Haushaltgerät 120 dann auf eine geeignete Zone gestellt, hier beispielhaft die zweite Energieversorgungszone 102, kann die hinterlegte Geräteeinstellung automatisiert wieder geladen werden. Wenn z.B. ein so genannter food processor von einer Energieversorgungszone 102, 104, 106, 108 zur nächsten Energieversorgungszone 102, 104, 106, 108 geschoben wird, wird die aktuelle Geräteeinstellung, beispielsweise eine Drehzahl, Temperatur und ein ausgewähltes Programm, wieder hergestellt. Optional kann die aktuelle Geräteeinstellung durch den Nutzer bestätigt und fortgesetzt werden.

Gemäß einem Ausführungsbeispiel können auch unterschiedliche Geräteeinstellungen auf verschiedenen Energieversorgungszonen 102, 104, 106, 108 für dasselbe Gerät, hier das mobile Haushaltgerät 120 hinterlegt werden, z.B. wenn ein Mixer von einer vorderen Zone mit hoher eingestellter Drehzahl auf eine hintere Zone mit niedriger Drehzahl geschoben wird.

Gemäß einem Ausführungsbeispiel ist die Energieversorgungsvorrichtung 100, hier beispielsweise das Kochfeld, vernetzungsfähig und die einzelnen aufgesetzten Kleingeräte sind in einer App, einem lokalen Speicher oder der Cloud hinterlegt. Die Kleingeräte, hier beispielsweise das mobile Haushaltgerät 120, können dadurch direkt in der App angezeigt werden. Es können aber auch bei vernetzungsfähigen Kleingeräten automatisch WLAN-Schlüssel ausgetauscht werden, so dass die Kleingeräte nicht mehr individuell vernetzt werden müssen.

Die gespeicherte Geräteeinstellung wird gemäß einem Ausführungsbeispiel auch zwischen zwei oder mehr vernetzen Sendeeinheiten, beispielsweise zwei separaten Energieversorgungsvorrichtung, ausgetauscht. Zum Beispiel können die auf der Energieversorgungszone 102 der Energieversorgungsvorrichtung 100 eingestellte Geräteparameter auf eine in einer Arbeitsplatte verbaute Zone übertragen werden, sobald das mobile Haushaltgerät 120 auf dieser erkannt wird. Dieses Verhalten kann mit einem Timer verknüpft sein, so dass die Einstellungen z.B. nur 60 Sekunden beibehalten werden. Bei einer späteren Anmeldung auf der zweiten Zone würde das mobile Haushaltgerät 120 wieder in eine Default-Einstellungen zurückspringen. Zusätzlich oder alternativ wird der Nutzer gemäß einem Ausführungsbeispiel gefragt, ob er die Einstellungen bei einem Wechsel übernehmen möchte oder diese gegebenenfalls verwerfen möchte.

Auf diese Weise können Kleingeräte sehr leicht vernetzt werden. Zudem bekommen die einzelnen Zonen, hier die Energieversorgungszone 102, 104, 106, 108 ein "Gedächtnis", wodurch der Komfort für den Nutzer erhöht wird.

Figur 2 zeigt eine Darstellung eines Ausführungsbeispiels einer Energieversorgungsvorrichtung 100, die mit einer anderen Energieversorgungseinrichtung 200 vernetzt ist. Die Energieversorgungsvorrichtung 100 ist beispielweise entsprechend der anhand von Figur 1 beschriebenen Energieversorgungsvorrichtung ausgeführt und hier beispielsweise als ein Kochfeld realisiert. Die andere Energieversorgungseinrichtung 200 ist beispielhaft entsprechend zu der Energieversorgungsvorrichtung 100 ausgeführt weist jedoch lediglich eine einzige Energieversorgungszone 202 auf, die gemäß einem Ausführungsbeispiel ausschließlich als Energieversorgungszone ausgeführt ist. Alternativ kann die Energieversorgungszone 202 ebenfalls als Kochstelle ausgeführt sein.

Ein mobiles Haushaltgerät 120, beispielsweise das bereits anhand von Figur 1 beschriebenen Kleingeräte ist beispielhaft auf der Energieversorgungszone 202 der anderen Energieversorgungsvorrichtung 200 abgestellt und wird dort mit einer Geräteeinstellung betrieben, beispielsweise mit der anhand von Figur 1 beschriebenen Geräteeinstellung "A". Beispielhaft ist ein Wechsel des mobilen Haushaltgerät 120 von der Energieversorgungszone 202 zu der ersten Energieversorgungszone 102 der Energieversorgungsvorrichtung 100 dargestellt. Gemäß einem Ausführungsbeispiel kann die Energieversorgungsvorrichtung 100 auf dieselbe Speichereinrichtung wie die Energieversorgungseinrichtung 200 zugreifen, in der ein der Geräteeinstellung zugeordneter Betriebsparameter zum Betreiben des mobilen Haushaltgeräts 120 abgespeichert ist. Dies ermöglicht es der Energieversorgungsvorrichtung 100 bei Erkennen des Anordnens des mobilen Haushaltgeräts 120 auf der ersten Energieversorgungszone 102, diesen Betriebsparameter nachzuschlagen und zu verwenden, um dieselbe Geräteeinstellung an dem mobilen Haushaltgerät 120 vorzunehmen, die das mobile Haushaltgerät 120 innehatte, als es zuvor auf der Energieversorgungszone 202 angeordnet war.

Gemäß einem Ausführungsbeispiel weisen die Energieversorgungsvorrichtung 100 und die Energieversorgungseinrichtung 200 keine gemeinsame Speichereinrichtung auf, sondern weisen separate Speichereinrichtungen auf, die jedoch Betriebsparameter untereinander austauschen können. Auf diese Weise kann eine Aktualisierung eines Betriebsparameters für ein Kleingerät in einer der Energieversorgungsvorrichtung 100 zugeordneten Speichereinrichtung zu einer entsprechenden Aktualisierung des Betriebsparameters in einer der anderen Energieversorgungseinrichtung 200 zugeordneten Speichereinrichtung führen.

Gemäß einem Ausführungsbeispiel handelt es sich bei der anderen Energieversorgungseinrichtung 200 nicht um eine separate Energieversorgungsvorrichtung, sondern beispielweise um eine verdeckt angeordnete Ladeeinheit. In diesem Fall ist die Energieversorgungszone 202 beispielsweise unterhalb einer Arbeitsplatte versteckt angeordnet. Dabei kann es sich um dieselbe Arbeitsplatte handelt in der auch die Energieversorgungsvorrichtung 100, beispielsweise in Form des Kochfelds, angeordnet ist.

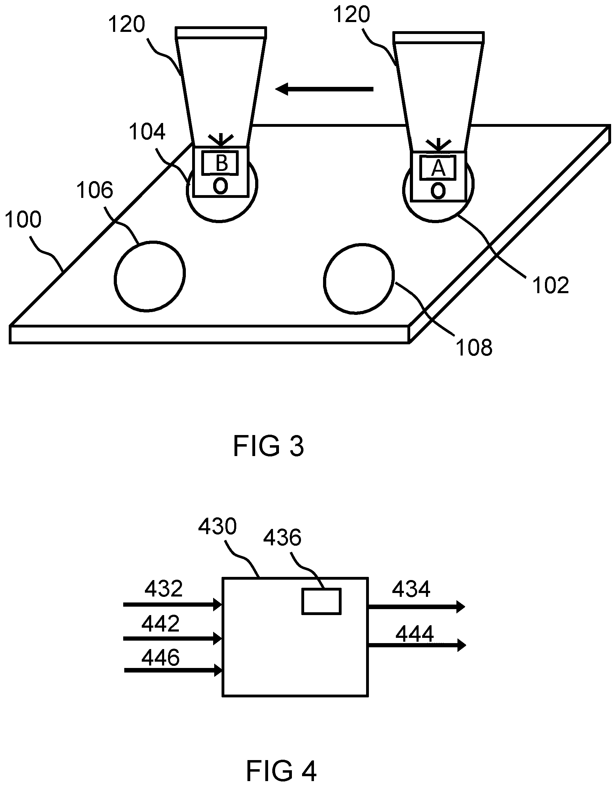

Figur 3 zeigt eine Darstellung eines Ausführungsbeispiels einer Energieversorgungsvorrichtung 100. Dabei kann es sich um die anhand von Figur 1 beschriebene Energieversorgungsvorrichtung in Form eines Kochfelds handeln.

Entsprechend zu Figur 1 ist wieder ein Wechsel des mobilen Haushaltgeräts 120 von der ersten Energieversorgungszone 102 zu der zweiten Energieversorgungszone 104 dargestellt. Das mobile Haushaltgerät 120 wird beispielhaft mit der ersten Geräteeinstellung "A" betrieben, solange es auf der ersten Energieversorgungszone 102 angeordnet ist. Gemäß diesem Ausführungsbeispiel sind unterschiedliche Energieversorgungszonen, hier der ersten Energieversorgungszone 102 und der zweiten Energieversorgungszone 104, unterschiedliche Geräteeinstellungen für das mobile Haushaltgerät 120 zugeordnet. Beispielhaft wird das mobile Haushaltgerät 120 bei einem Wechsel von der ersten Energieversorgungszone 102 auf die zweite Energieversorgungzone 104 nicht mehr mit der ersten Geräteeinstellung "A" sondern mit einer zweiten Geräteeinstellung "B" betrieben. Dazu sind beispielweise zumindest zwei unterschiedliche Betriebsparameter für ein und dasselbe mobile Haushaltgerät 120 hinterlegt. Ein erster Betriebsparameter ist dabei mit der ersten Energieversorgungszone 102 verknüpft hinterlegt und definiert die erste Geräteeinstellung "A". Ein zweiter Betriebsparameter ist mit der zweiten Energieversorgungszone 104 verknüpft hinterlegt und definiert die zweite Geräteeinstellung "B". Entsprechend können weitere Betriebsparameter für weitere Energieversorgungszonen, wie die Energieversorgungszonen 106, 108, hinterlegt sein, die beispielhaft weitere Geräteeinstellungen definieren. Ebenso können Betriebsparameter für weitere Kleingeräte hinterlegt sein.

Figur 4 zeigt eine schematische Darstellung eines Ausführungsbeispiels einer Steuereinrichtung 430. Die Steuereinrichtung 430 kann beispielweise Teil einer Steuereinheit eines Kochfelds sein, wie es in den vorangegangenen Figuren dargestellt ist. Gemäß einem Ausführungsbeispiel wird die Steuereinrichtung 430 verwendet, um an einem mobilen Haushaltgerät unter Verwendung eines gespeicherten Betriebsparameters eine durch einen Betriebsparameter definierte Geräteeinstellung vorzunehmen, sobald das mobile Haushaltgerät auf einer Energieversorgungszone angeordnet wird.

Gemäß einem Ausführungsbeispiel ist die Steuereinrichtung 130 ausgebildet, um ansprechend auf ein Anordnen eines mobilen Haushaltgeräts ein Erkennungssignal 432 einzulesen. Beispielweise weist die Energieversorgungsvorrichtung eine geeignete Sensorik auf, die eine Anordnung des mobilen Haushaltgeräts auf einer Energieversorgungszone erfassen kann. Gemäß einem Ausführungsbeispiel überträgt das Erkennungssignal 432 sowohl eine Kennung der Energieversorgungszone, auf der das mobile Haushaltgerät angeordnet wird, als auch eine Identifikation des mobilen Haushaltgeräts. Beispielsweise wird die Identifikation des mobilen Haushaltgeräts dazu über eine Kommunikationsschnittstelle zwischen der Energieversorgungsvorrichtung und dem mobilen Haushaltgerät ausgelesen.

Die Steuereinrichtung 130 ist ausgebildet, um ansprechend auf das erkannte Anordnen des mobilen Haushaltgeräts, das hier beispielhaft über das Erkennungssignal 432 angezeigt wird, einen hinterlegten Betriebsparameter für eine zuvor hinterlegte Geräteeinstellung des mobilen Haushaltgeräts nachzuschlagen. Dazu verwendet die Steuereinrichtung 130 die Identifikation des mobilen Haushaltgeräts und optional die Kennung der Energieversorgungszone auf der das mobile Haushaltgerät angeordnet ist.

Um die dem hinterlegten Betriebsparameter entsprechende Geräteeinstellung des mobilen Haushaltgeräts vorzunehmen ist die Steuereinrichtung 130 gemäß einem Ausführungsbeispiel ausgebildet, um unter Verwendung des Betriebsparameters ein Einstellsignal 434 bereitzustellen, das geeignet ist um die Geräteeinstellung an dem mobilen Haushaltgerät vorzunehmen. Beispielweise wird das Einstellsignal 134 dazu von einer Kommunikationseinrichtung der entsprechenden Energieversorgungszone bereitgestellt. Beispielweise ist das Einstellsignal 130 geeignet, um eine Kommunikationsspule der Energieversorgungszone so zu betreiben, dass der Betriebsparameter an das mobile Haushaltgerät übertragen und dort zum Einstellen der Geräteeinstellung verwendet wird.

Gemäß einem Ausführungsbeispiel umfasst die Steuereinrichtung 130 eine Speichereinrichtung 436, in der zumindest ein Betriebsparameter für zumindest ein mobiles Haushaltgerät hinterlegt ist, typischerweise Betriebsparameter für eine Mehrzahl unterschiedlicher mobiler Haushaltgeräte. Alternativ weist die Steuereinrichtung 130 eine Schnittstelle zu einer entsprechenden Speichereinrichtung auf.

Die Steuereinrichtung 130 ist gemäß einem Ausführungsbeispiel ausgebildet, um entsprechend dem Erkennungssignal 432 weitere Erkennungssignale, beispielsweise ein weiteres Erkennungssignal 442 einzulesen. Dadurch wird es der Steuereinrichtung 130 ermöglicht, ansprechend auf eine Anordnung weiterer mobiler Haushaltgeräte auf weiteren Energieversorgungszonen oder ansprechend auf einen Wechsel eines mobilen Haushaltgeräts von einer Energieversorgungszone auf eine andere Energieversorgungszone, jeweils einen entsprechenden Betriebsparameter nachschlagen zu können. Der entsprechende Betriebsparameter wird dann von der Steuereinrichtung 130 verwendet, um an den entsprechenden mobilen Haushaltgeräten die jeweils hinterlegten Geräteeinstellungen vorzunehmen. Dies ist beispielhaft durch ein weiteres Einstellsignal 444 dargestellt.

Gemäß einem Ausführungsbeispiel ist die Steuereinrichtung 430 ausgebildet, um in der Speichereinrichtung 436 hinterlegte Betriebsparameter fortlaufend zu aktualisieren, beispielsweise ansprechend auf ein Abstellen eines mobilen Haushaltgeräten auf einer Energieversorgungszone oder ansprechend auf eine Änderung einer Geräteeinstellung eines sich auf einer Energieversorgungszone befindlichen Haushaltgeräts durch eine Nutzer, beispielsweise durch eine entsprechende Eingabe über eine Benutzerschnittstelle der Energieversorgungsvorrichtung, eines mobilen Geräts oder einer Benutzerschnittstelle des mobilen Haushaltgeräts. Optional sind in der Speichereinrichtung 436 Defaultparameter hinterlegt, die es ermöglichen, eine Defaulteinstellung an einem mobilen Haushaltgerät vorzunehmen, beispielsweise wenn das Haushaltgerät für eine längere Zeitspanne nicht verwendet wurde.

Gemäß einem Ausführungsbeispiel ist die Steuereinrichtung 430 ausgebildet, um ein Bestätigungssignal 446 einzulesen. Über das Bestätigungssignal 446 kann ein Nutzer beispielsweise nach einem Wechsel eines Haushaltgeräts auf eine neue Energieversorgungszone bestätigen, dass die vor dem Wechsel bestehende Geräteeinstellung nach dem Wechsel übernommen werden soll.

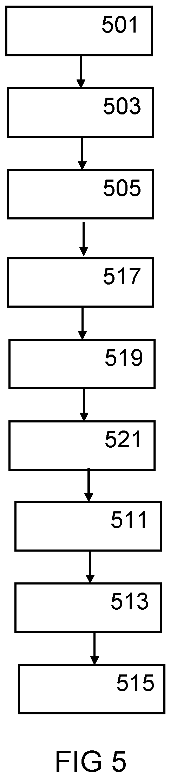

Figur 5 zeigt ein Ausführungsbeispiel eines Ablaufdiagramms eines Verfahrens zum Betreiben eines mobilen Haushaltgeräts. Dabei kann es sich es sich beispielweise um ein mobiles Haushaltgerät handeln, wie es anhand der vorangegangenen Figuren beschrieben ist. Das mobile Haushaltgerät kann dabei unter Verwendung einer Energieversorgungszone einer Energieversorgungsvorrichtung betrieben werden, wie sie beispielweise anhand der vorangegangenen Figuren beschrieben ist. Beispielsweise können die Verfahrensschritte unter Verwendung von Einrichtungen einer Steuereinrichtung umgesetzt werden, wie sie anhand von Figur 4 beschrieben ist.

In einem Schritt 501 wird ein Erkennungssignal eingelesen. Das Erkennungssignal wird beispielsweise über eine Schnittstelle zu einer Energieversorgungszone eingelesen, auf der ein mobiles Haushaltgerät angeordnet wird. Gemäß einem Ausführungsbeispiel umfasst das Erkennungssignal sowohl eine Kennung der Energieversorgungszone als auch eine Identifikation des mobilen Haushaltgeräts. Optional wird über das Erkennungssignal zu dem ein erster Zeitpunkt angezeigt, zu dem das mobile Haushaltgerät auf der Energieversorgungszone angeordnet wird als auch ein zweiter Zeitpunkt angezeigt zu dem das mobile Haushaltgerät gegebenenfalls von der Energieversorgungszone entfernt wird.

In einem Schritt 503 wird unter Verwendung der von dem Erkennungssignal übertragenen Identifikation und optional unter Verwendung der von dem Erkennungssignal übertragenen Kennung der Energieversorgungszone auf der das mobile Haushaltgerät angeordnet ist, ein Betriebsparameter nachgeschlagen, der verwendet werden kann, um eine für das Haushaltgerät hinterlegte Geräteeinstellung vorzunehmen. Beispielweise wird dazu in einer in einer Speichereinrichtung gespeicherten Nachschlagetabelle nachgeschlagen, in der für unterschiedliche Haushaltgeräte, gegebenenfalls verknüpft mit unterschiedlichen Energieversorgungszonen, Betriebsparameter für unterschiedliche Geräteeinstellungen hinterlegt sind.

In einem Schritt 505 wird der im Schritt 503 ausgewählte Betriebsparameter verwendet, um ein Einstellsignal bereitzustellen, das geeignet ist, um die durch die Betriebsparameter definierte Geräteeinstellung an dem mobilen Haushaltgerät durchzuführen. Dazu wird das Einstellsignal beispielsweise an eine Schnittstelle zu der Energieversorgungszone bereitgestellt, auf der das mobile Haushaltgerät angeordnet ist.

Gemäß einem Ausführungsbeispiel werden die Schritte 501, 503, 505 fortlaufend wiederholt ausgeführt, um auf Anordnungen weiterer Haushaltgeräte auf weiteren Energieversorgungszonen reagieren zu können oder auf einen Wechsel eines Haushaltgeräts zu einer anderen Energieversorgungszone.

Beispielhaft ist dazu in Figur 5 ein wiederholter Schritt 511 des Einlesens, ein wiederholter Schritt 513 des Nachschlagens und ein wiederholter Schritt 515 des Bereitstellens dargestellt.

Gemäß einem Ausführungsbeispiel wird in dem wiederholten Schritt 511 ein weiteres Erkennungssignal eingelesen, das eine Anordnung des mobilen Haushaltgeräts auf einer weiteren der Mehrzahl von Energieversorgungszonen anzeigt. Dementsprechend umfasst das weitere Erkennungssignal eine Kennung der weiteren Energieversorgungszone und die Identifikation des mobilen Haushaltgeräts. In dem wiederholten Schritt 513 wird unter Verwendung der von dem weiteren Erkennungssignal übertragenen Identifikation und optional unter Verwendung der von dem weiteren Erkennungssignal übertragenen Kennung der weiteren Energieversorgungszone ein weiterer Betriebsparameter nachgeschlagen, der im wiederholten Schritt 515 verwendet wird, um die bereits zuvor verwendete oder optional eine für die weitere Energieversorgungszone hinterlegte spezifische andere Geräteeinstellung vorzunehmen. Optional wird die Geräteeinstellung in einem solchen Fall vorgenommen, wenn dies von einem Nutzer bestätigt wird. Beispielweise kann der Nutzer eine solche Bestätigung über eine geeignete Benutzerschnittstelle eingeben und die Bestätigung kann über ein entsprechendes Bestätigungssignal übertragen werden. Ohne eine solche Bestätigung wird das Haushaltgerät beispielsweise mit einer Defaulteinstellung betrieben oder in einem ausgeschalteten Zustand belassen.

Optional wird bei einem Wechsel des mobilen Haushaltgeräts von einer Energieversorgungszone zu einer anderen Energieversorgungszone eine Zeitspanne erfasst, die während des Wechsels vergangen ist. Diese Zeitspanne wird optional im Schritt 513 beim wiederholten Nachschlagen des Betriebsparameters verwendet. Beispielweise wird nur dann nach einem zuvor verwendeten Betriebsparameter nachgeschlagen, wenn die Zeitspanne kleiner als eine vorbestimmte Wechselzeit ist. Gemäß einem Ausführungsbeispiel wird in dem wiederholten Schritt 513 ein für das mobile Haushaltgerät hinterlegter Defaultparameter als der Betriebsparameter für die Geräteeinstellung des mobilen Haushaltgeräts ausgewählt, wenn die Zeitspanne größer als die vorbestimmte Wechselzeit ist.

Gemäß einem Ausführungsbeispiel umfasst das Verfahren einen optionalen Schritt 517 in dem ein hinterlegter Betriebsparameter aktualisiert wird und zusätzlich oder alternativ einen optionalen Schritt 519, in dem ein entsprechender Betriebsparameter gespeichert wird. Beispielsweise wird eine Aktualisierung durchgeführt, wenn eine Geräteeinstellung eines mobilen Haushaltgeräts durch einen Nutzer verändert wird. Auf diese Weise kann die geänderte Geräteeinstellung auch dann beibehalten werden, wenn das Haushaltgerät auf eine andere Energieversorgungszone verschoben wird. Der Schritt 519 des Speicherns bietet sich beispielsweise an, wenn ein mobiles Haushaltgerät erstmalig von einer Energieversorgungsvorrichtung erkannt wird, und somit noch kein Betriebsparameter für dieses mobile Haushaltgerät hinterlegt ist.

Optional umfasst das Verfahren einen Schritt 521, in dem ein Betriebsparameter zu einer Speichereinrichtung einer anderen Energieversorgungsvorrichtung oder einer anderen Energieversorgungseinrichtung übertragen wird. Auf diese Weise kann eine Geräteeinstellung beispielsweise zwischen unterschiedlichen Kochfeldern übertragen werden.

Die lediglich beispielhaft gezeigt Schritte des Verfahrens können auf eine geeignete Weise wiederholt und dabei unterschiedlicher Reihenfolge ausgeführt werden.

## Patentansprüche

1. Verfahren zum Betreiben eines mobilen Haushaltgeräts (120) unter Verwendung einer Energieversorgungsvorrichtung (100), die eine Mehrzahl von Energieversorgungszonen (102, 104, 106, 108) zum Versorgen mobiler Haushaltgeräte mit Energie umfasst, wobei das Verfahren die folgenden Schritte umfasst:
Einlesen (501) eines Erkennungssignals (432), das ein Anordnen eines mobilen Haushaltgeräts (120) auf einer der Mehrzahl von Energieversorgungszonen (102, 104, 106, 108) anzeigt und eine Kennung der Energieversorgungszone (102) und eine Identifikation des mobilen Haushaltgeräts (120) umfasst;
Nachschlagen (503) eines Betriebsparameters für eine Geräteeinstellung des mobilen Haushaltgeräts (120) in einer Speichereinrichtung (436) unter Verwendung der von dem Erkennungssignal (432) umfassten Identifikation des mobilen Haushaltgeräts (120); und
Bereitstellen (505) eines Einstellsignals (434) zum Durchführen der Geräteeinstellung an dem mobilen Haushaltgerät (120) unter Verwendung des Betriebsparameters.

2. Verfahren gemäß Anspruch 1, wobei im Schritt (503) des Nachschlagens der Betriebsparameter unter Verwendung der von dem Erkennungssignal (432) umfassten Kennung ausgelesen wird.

3. Verfahren gemäß einem der vorangegangenen Ansprüche, mit wiederholten Schritten (513, 515) des Nachschlagens und Bereitstellens, wenn in einem wiederholten Schritt (511) des Einlesens ein weiteres Erkennungssignal (442) erfasst wird, das eine Anordnung des mobilen Haushaltgeräts (120) auf einer weiteren der Mehrzahl von Energieversorgungszonen (102, 104, 106, 108) anzeigt und eine Kennung der weiteren Energieversorgungszone (104) und die Identifikation des mobilen Haushaltgeräts (120) umfasst.

4. Verfahren gemäß Anspruch 3, wobei das Erkennungssignal (432) einen Zeitpunkt des Anordnens des mobilen Haushaltgeräts (120) auf der Energieversorgungszone (102) und einen Zeitpunkt des Entfernens des mobilen Haushaltgeräts (120) von der Energieversorgungszone (102) anzeigt und das weitere Erkennungssignal (442) einen weiteren Zeitpunkt des Anordnens des mobilen Haushaltgeräts (120) auf der weiteren Energieversorgungszone (104) anzeigt

5. Verfahren gemäß Anspruch 4, wobei der wiederholte Schritt (513) des Nachschlagens abhängig von einer Zeitspanne zwischen dem Zeitpunkt des Entfernens des mobilen Haushaltgeräts (120) von der Energieversorgungszone (102) und dem Zeitpunkt des Anordnens des mobilen Haushaltgeräts (120) auf der weiteren Energieversorgungszone (104) ausgeführt wird.

6. Verfahren gemäß Anspruch 5, wobei in dem wiederholten Schritt (513) des Nachschlagens der Betriebsparameter für die Geräteeinstellung des mobilen Haushaltgeräts (120) in der Speichereinrichtung (436) nachgeschlagen wird, wenn die Zeitspanne kleiner als eine vorbestimmte Wechselzeit ist.

7. Verfahren gemäß Anspruch 6, wobei in dem wiederholten Schritt (515) des Bereitstellens ein weiteres Einstellsignal (444) zum Durchführen der Geräteeinstellung an dem mobilen Haushaltgerät (120) unter Verwendung des Betriebsparameters durchgeführt wird, wenn ein Bestätigungssignal (446) eine über eine Benutzerschnittstelle (110) getätigte Bestätigung eines Nutzers anzeigt.

8. Verfahren gemäß Anspruch 6 oder 7, wobei in dem wiederholten Schritt (513) des Nachschlagens ein Defaultparameter als der Betriebsparameter für die Geräteeinstellung des mobilen Haushaltgeräts (120) in der Speichereinrichtung (436) nachgeschlagen wird, wenn die Zeitspanne größer als die vorbestimmte Wechselzeit ist.

9. Verfahren gemäß einem der vorangegangenen Ansprüche, mit einem Schritt (517) des Aktualisierens des der Identifikation des mobilen Haushaltgeräts (120) zugeordneten Betriebsparameters in der Speichereinrichtung (436) ansprechend auf eine Änderung der Geräteeinstellung des mobilen Haushaltgeräts (120).

10. Verfahren gemäß einem der vorangegangenen Ansprüche, mit einem Schritt (519) des Speicherns des der Identifikation des mobilen Haushaltgeräts (120) zugeordneten Betriebsparameters zusammen mit einer Kennung einer der Mehrzahl von Energieversorgungszonen (102, 104, 106, 108) in der Speichereinrichtung (436) ansprechend auf eine Anordnung des mobilen Haushaltgeräts (120) auf der Energieversorgungszone (102).

11. Verfahren gemäß einem der vorangegangenen Ansprüche, mit einem Schritt (521) des Übertragens des Betriebsparameters zu einer Speichereinrichtung einer anderen Energieversorgungseinrichtung (200), die zumindest eine andere Energieversorgungszone (202) zum Versorgen mobiler Haushaltgeräte mit Energie umfasst.

12. Steuereinrichtung (430), die ausgebildet ist, um die Schritte des Verfahrens gemäß einem der vorangegangenen Ansprüche in entsprechenden Einheiten auszuführen und/oder anzusteuern.

13. Computer-Programmprodukt mit Programmcode zur Durchführung des Verfahrens nach einem der Ansprüche 1 bis 11, wenn das Computer-Programmprodukt auf einer Steuereinrichtung gemäß Anspruch 12 ausgeführt wird.

14. Energieversorgungsvorrichtung (100) mit einer Mehrzahl von Energieversorgungszonen (102, 104, 106, 108) zum Versorgen mobiler Haushaltgeräte (120) mit Energie und mit einer Steuereinrichtung (430) gemäß Anspruch 12.

15. Energieversorgungsvorrichtung (100) gemäß Anspruch 14, die als ein Kochfeld ausgeführt ist, wobei zumindest eine der Mehrzahl von Energieversorgungszonen (102, 104, 106, 108) als eine induktive Kochzone zum Erhitzen eines Kochgeschirrs und als eine induktive Ladezone zum Versorgen eines mobilen Haushaltgerätes (120) mit Energie ausgeführt ist.
